(19) Europäisches Patentamt / European Patent Office / Office européen des brevets

(11) **EP 4 760 238 A1**

(12) **EUROPEAN PATENT APPLICATION**

(43) Date of publication:
**17.06.2026 Bulletin 2026/25**

(21) Application number: **24383345.6**

(22) Date of filing: **10.12.2024**

(51) International Patent Classification (IPC):
**G01N 21/25** *(2006.01)* **G01N 21/77** *(2006.01)*
**G02B 6/00** *(2006.01)*

(52) Cooperative Patent Classification (CPC):
**G01N 21/7703; G01N 21/255; G02B 6/00;**
G01N 2021/7776; G01N 2021/7779; G01N 2201/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bioherent S.L.**
**29590 Málaga (ES)**

(72) Inventors:
- **Leuermann, Jonas**
  **29590 Málaga (ES)**
- **Martínez Castellano, Eduardo**
  **29590 Málaga (ES)**
- **Guzmán Giraldo, Diego Mauricio**
  **29590 Málaga (ES)**

- **Molina Fernández, Íñigo**
  **29590 Málaga (ES)**
- **Halir, Robert**
  **29590 Málaga (ES)**
- **Wangüemert Pérez, Gonzalo**
  **29590 Málaga (ES)**
- **Ortega Moñux, Alejandro**
  **29590 Málaga (ES)**
- **Sanchez Ramirez, Ana**
  **29590 Málaga (ES)**
- **Barona Ruiz, Miguel**
  **29590 Málaga (ES)**

(74) Representative: **Grünecker Patent- und
Rechtsanwälte
PartG mbB
Leopoldstraße 4
80802 München (DE)**

(54) **METHOD AND SYSTEM FOR THE READOUT OF PHOTONIC INTEGRATED CIRCUITS**

(57) The invention relates to a method (100) for reading out a sensing device (302) comprising a photonic integrated circuit (200), comprising: inputting (101) light from at least one light source (201), e.g. via free space, into at least one input grating of the photonic integrated circuit (200), and collecting (102), by a readout system (303), at least one light signal outputted via free space by at least one output grating of the photonic integrated circuit (200).

FIG. 3c

EP 4 760 238 A1

## Description

Field of invention

The present invention relates to a method for reading out a sensing device comprising a photonic integrated circuit, a system for reading out a sensing device comprising a photonic integrated circuit and a sensing device comprising a photonic integrated circuit.

Background

Photonic integrated circuits are a key component of evanescent wave sensing devices, for example in photonic or optical biosensor devices for the detection and analysis of biomarkers, e.g. analytes, in biological samples.

A drawback of current readout systems for reading out sensing devices comprising photonic integrated circuits is that they are rather intricately built, costly to manufacture and challenging to operate.

Furthermore, current readout systems are often highly susceptible to misalignments along the photonic paths that can lead to significant light signal losses. In addition, current readout systems can also be susceptible to mechanical vibrations and other mechanical impact forces that can significantly degrade the efficiency with which the light signal from the sensing devices can be read out.

Problem

It is therefore the object of the present invention to provide an improved readout system and an improved method for reading out a sensing device comprising a photonic integrated circuit.

In particular, it is an object of the present invention to improve the robustness, efficiency, accuracy and performance of readout systems for reading out a sensing device comprising a photonic integrated circuit.

It is further an object of the present invention to reduce light signal losses of readout systems when reading out a sensing device comprising a photonic integrated circuit.

In addition, it is inter alia an object of the present invention to facilitate the alignment of the components of the readout system, in particular with respect to improving the accuracy of aligning the light signal paths of the readout system.

Furthermore, it is an object of the present invention to reduce manufacturing costs and/or operational costs of readout systems for photonic integrated circuits.

Solution

According to the present invention, said objects are achieved by the subject-matter of the independent claim.

Advantageous embodiments and further developments are the subject-matter of the dependent claims.

An exemplary method for reading out a sensing device comprising a photonic integrated circuit can comprise one, some or all of the following steps:

- A step of inputting light from at least one light source, e.g. via free space, into at least one input grating of the photonic integrated circuit,

- a step of collecting or reading out, by a readout system, at least one light signal outputted via free space by at least one output grating of the photonic integrated circuit.

Herein, the term free space can inter alia be understood as referring to air or to space that is free of matter, e.g. free of solid matter. In particular, the term free space can be understood as space that is free of transmission lines or waveguides, e.g. fiber-optic cables.

Herein, the term grating can inter alia be understood as referring to diffraction gratings, i.e. the at least one input grating and the at least one output grating can be diffraction gratings.

Furthermore, the above and herein exemplary described gratings can inter alia be understood as interfaces that can convert unguided light, i.e. light propagating in free space, into guided light, i.e. light propagating in waveguides, and vice versa.

For example, the at least one input grating can inter alia be understood as acting as an interface for converting the free-space propagating or unguided light from the at least one light source into guided light propagating in said photonic circuit. Correspondingly, the at least one output grating can inter alia be understood as acting as an interface for converting the guided light from the photonic integrated circuit, e.g. from the output grating(s) of the photonic integrated circuit, into unguided light, i.e. light propagating in free space.

The at least one output grating can be fed by one or more photonic sensors, e.g. photonic biosensors, of the photonic integrated circuit that can generate a light signal/light signals based on their interaction with a sample, e.g. a liquid sample, received by the sensing device. Herein, said light signal/light signals can inter alia be understood as representing changes in the properties of the inputted/injected light, e.g. phase changes and/or amplitude changes and/or spectral changes, due to the interaction of the inputted/injected light with a sample in the sensing device.

Said one or more photonic sensors, e.g. said photonic biosensors or biosensors, of the photonic integrated circuit can be implemented as interferometric sensors, e.g. Mach-Zehnder interferometric sensors that can be combined with multimode interferometers, e.g. 1x2 and/or 2x3 multimode interferometers.

The above and herein exemplary described method and its steps can be computer-implemented, e.g. can be at least partially or fully controlled by or carried out by or assisted by a digital processor unit that can be part of a programmable control unit.

The term photonic integrated circuit can inter alia be understood as a microchip or chip comprising photonic components as part of a functioning integrated circuit. In other words, the term photonic integrated circuit may also be referred to as an on-chip photonic integrated circuit which, for example, can comprise a substrate, e.g. a silicon-based substrate, onto which the photonic integrated circuit can be integrated.

Said photonic integrated circuit may also be referred to herein as photonic chip.

For completeness, it is noted that said photonic integrated circuit or said photonic chip may in addition also comprise further electrical integrated circuits, e.g. said photonic integrated circuit or said photonic chip may comprise a mixture of photonic circuits and electrical circuits.

The above and herein exemplary described method allows dispending with the need of any waveguides or fiber-optic cables in the light output path from said output grating of the photonic integrated circuit to the readout system, since the output of the at least one light signal is implemented entirely in free space.

This inter alia improves the efficiency and robustness of the readout process of light outputted by the photonic integrated circuit and also simplifies the readout process.

Also the step of inputting light from said at least one light source into said at least one input grating of the photonic integrated circuit can be carried out entirely in free space.

This further contributes to the efficiency and robustness of the readout process for reading out a sensing device comprising a photonic integrated circuit.

In other words, the above and herein exemplary described method provides a method for reading out a sensing device comprising a photonic integrated circuit, wherein both the step of inputting light into the at least one input grating of the photonic integrated circuit and the step of collecting or reading out, by a readout system, the at least one light signal outputted by the at least one output grating of the photonic integrated circuit can be implemented entirely and exclusively in free space, i.e. without any waveguides or fiber-optic cables.

This can significantly increase the robustness of the readout process for reading out a sensing device comprising a photonic integrated circuit, since the potential risk posed by faulty or fragile or misaligned waveguides or fiber-optic cables in the input and/or in the output path of the photonic integrated circuit can be entirely avoided. As previously mentioned, light coupling losses, e.g. coupling losses of due to fiber optic connections, can be avoided or minimized.

For completeness, it is further noted that the light signal paths within the photonic integrated circuit, e.g. between components of the photonic integrated circuit, may comprise waveguides or fiber-optic cables. However, it is also conceivable that the light signal paths within the photonic integrated circuit also are implemented as free space light paths.

The at least one light signal outputted by the at least one output grating of the photonic integrated circuit and collected by the readout system can be further processed and analyzed.

For example, one or more parameters from the collected outputted light signal can be determined that can be used in the analysis of the outputted light signal, e.g. for the detection and analysis of biomarkers, e.g. an analyte, in a biological sample that has been provided to the sensing device and that has been processed by the photonic integrated circuit.

Said one or more parameters that can be determined from the collected or readout outputted light signal can be at least one of the following parameters: a refractive index, a temperature or a wavelength of the outputted light signal.

Herein, the term temperature can inter alia also refer to the temperature of the photonic integrated circuit or photonic chip and/or to a temperature of a component of the photonic integrated circuit or photonic chip, and/or to the temperature of a biological sample housed in the sensing device.

Furthermore, it is noted that since the refractive index is a function of temperature, temperature changes can be sensed as phase shifts.

It is further possible that a spectral analysis or photometric analysis is carried out on the collected or readout outputted light signal.

This enables a wide range of applications for using the sensing device, including detecting, monitoring and analyzing a variety of biomarkers, e.g. an analyte, in a biological sample received by the sensing device.

Herein, the term analyte can inter alia be understood as a substance of interest in an analytical procedure, e.g. a substance of interest in a biological sample, in particular in a fluidic/liquid biological sample, e.g. a blood sample.

The above and herein described method for reading out a sensing device comprising a photonic integrated circuit may be implemented using a variety of different light path configurations with different geometries.

For example, the step of inputting the light into the at least one input grating of the photonic integrated circuit may comprise inputting the light in an input direction that is parallel or not parallel to a/the normal vector of a/the surface, e.g. a top surface or bottom surface, of the photonic integrated circuit.

Furthermore, the angle between the input direction and the normal vector of the surface of the photonic integrated circuit, also referred to as input direction angle, can be equal or not equal to the angle between the output direction of the outputted light signal and the normal vector of the surface of the photonic integrated circuit, also referred to as output direction angle.

Stated differently, the input vector, that can be defined by the input direction and input direction angle of the light inputted via the at least one light source into the at least one input grating of the photonic integrated circuit, can be antiparallel to the output vector, that can be defined by the output direction and output direction angle of the outputted light signal.

Herein the term equal can be understood as equality within a predetermined tolerance range, e.g. the input direction angle may be considered equal to the output direction angle if the difference between said two angles is less than a predetermined tolerance range, e.g. an angular difference tolerance range of 10% or 1% or less.

Using configurations wherein input direction angle and the output direction angle are equal, e.g. wherein the input vector and output vector are antiparallel, can improve the spatial compactness of a system for reading out the sensing device and comprising the at least one light source and the readout system.

Furthermore, in such possible exemplary configurations, undesired direct reflections of the inputted light from the input grating do not reach the readout system, e.g. do not reach a/the photodetector of the readout system. In addition, such possible exemplary configurations increase the overall stability of the readout system and readout process, since variations and errors in the positioning of the photonic integrated circuit do not easily translate into alignment failures.

However, it is further possible that the output direction of the light signal outputted via free space by at least one output grating of the photonic integrated circuit is equal or parallel to the normal vector of the photonic integrated circuit. In this possible exemplary way an on-axis readout system could be realized, wherein the output direction of the outputted light signal could be aligned with the optical axis of the output grating.

However, it is also possible that said input vector and said output vector are neither parallel nor antiparallel to each other.

For example, it is conceivable that said input vector and said output vector are orthogonal to each other. This can minimize the risk of the readout system blocking or obstructing the inputting of light via the at least one light source.

The inputting of the light and the outputting of the light signal can be implemented on the same side with respect to the same surface, e.g. the top surface or bottom surface, of the photonic integrated circuit. For example, the inputting of the light from the at least one light source and the outputting of the light signal by the at least one output grating of the photonic integrated circuit can occur on the same side of the photonic integrated circuit, i.e. both the at least one light source and the readout system can be arranged on the same side with respect to the photonic integrated circuit, e.g. below or above the photonic integrated circuit.

Again, this can inter alia further improve the spatial compactness of a/the system for reading out the sensing device.

However, it is also possible that the inputting of the light and the outputting of the light signal are implemented on different sides of the photonic integrated circuit, i.e. it is conceivable that the at least one light source and the readout system can be arranged on different sides with respect to the photonic integrated circuit, e.g. with the light source arranged above the photonic integrated circuit and the readout system arranged below the photonic integrated circuit.

Furthermore, the collecting, by a/the readout system, at least one light signal outputted via free space by the at least one output grating of the photonic integrated circuit, may comprise collecting the light signal such that the collected light signal hits the readout system, e.g. the photodetector or the photodiode array, at an angle that is orthogonal or substantially orthogonal to the surface of the readout system, e.g. orthogonal to the surface of the photodetector or the photodiode array.

This arrangement of the readout system with respect to the least one light signal outputted via free space by the at least one output grating of the photonic integrated circuit can inter alia improve the signal to noise ratio for the collected light signal, since it can improve the light signal collection efficiency. In particular, it can reduce undesired cross talk or interference between components of the readout system, e.g. unwanted cross talk between neighboring photodiodes, and can ensure uniform collection of the light signal across the readout system.

In any case of the above, herein and hereafter described arrangements of the light source and the photonic integrated circuit (or sensing device), the input vector of the light inputted via the at least one light source into the at least one input grating of the photonic integrated circuit and/or the output vector of the outputted light signal can be not parallel to the surface, e.g. the top surface or bottom surface, of the photonic integrated circuit. Stated differently, the input angle (or input direction angle) and the output angle (or output direction angle), measured with respect to a normal vector of the surface, e.g. the top surface or bottom surface, of the photonic integrated circuit, can always be less than 90°. Herein, the surface of the photonic integrated circuit can be understood as being parallel to the surface of the sensing device, i.e. the top surface and bottom surface of the sensing device can be parallel to the top surface and bottom surface of the photonic integrated circuit. Furthermore, all said surfaces can be flat surfaces.

The step of the inputting of light via the at least one light source may comprise focusing or collimating, e.g. by an input optical system, the light onto a spot on the at least one input grating of the photonic integrated circuit, wherein the spot size can be at least the same size or larger than the size of the at least one input grating, e.g. at least one order of magnitude larger. Said possible exemplary input optical system can comprise one or more optical elements, e.g. lenses, mirrors or reflectors. For example, said possible exemplary input optical system can comprise a focusing lens.

This can inter alia optimize the efficiency of the readout of the sensing device since it can be better ensured that the input grating always receives sufficient light.

An exemplary range of spot sizes can lie in the range of 100 to 10000 $\mu$m$^2$.

Furthermore, the possibility of focusing or collimating the light onto a spot with a spot size being larger than the size of the at least one input grating can ensure that the input grating receives sufficient light even in the case of minor misalignments, e.g. misalignments on the scale of micrometers, between the light source and the input grating.

This can ensure that the light-coupling efficiency remains high, e.g. higher than 90%, even with micrometric misalignments such as those caused by mechanical vibrations or thermal expansions or contractions of possible supporting structures of the light source and/or the photonic integrated circuit.

The light signal that is outputted via free space by the at least one output grating of the photonic integrated circuit can be outputted by said output grating as a focused beam or as focused beams or as a collimated beam or as collimated beams.

In addition, the light signal outputted via free space by the at least one output grating of the photonic integrated circuit can be directed by an output optical system onto the readout system, wherein said output optical system can comprise one or more optical elements, e.g. lenses, mirrors or reflectors.

This can improve the light signal collection efficiency of the readout system and can improve the signal-to-noise ratio of the light signal outputted by the at least one output grating of the photonic integrated circuit and collected or read out by the readout system.

The at least one output grating and the at least one input grating as well as other gratings, e.g. additional auxiliary input gratings and additional output gratings, may comprise silicon based materials, e.g. may comprise or consist of silicon nitride on silicon dioxide.

All of said gratings can be transmission gratings and all of said gratings can for example be operated at 1550 nm.

Further, exemplary parameters and characteristics of the at least one input grating of the photonic integrated circuit can be as follows.

The grating period of the at least one input grating, i.e. the distance from the center of one groove to the center of the next groove of the grating, may, for example, lie between 0.2 to 5.0 $\mu$m (micrometers or microns).

The height of the at least one input grating, i.e. the distance from the grating base to the top of the stripes, may lie between 200 and 500 nm.

The duty cycle of the at least one input grating, i.e. the ratio between width of the grooves (or lines) to the period of the grating, may, for example, lie between 0.20 to 0.90.

The etch parameter of the at least one input grating, i.e. the ratio of the depth of a groove of the grating to the total thickness of depth of the grating material, may, for example, lie between 0.5 to 1.0, wherein an etch parameter of 1.0 denotes a fully etched grating.

The at least one input grating may be a first order grating, i.e. with a diffraction order of +/- 1. However, the at least one input grating may also be of higher orders.

An exemplary width or mode field diameter (MDF) of the radiation profile of an exemplary fully etched silicon-nitride input grating of first order, built on silicon dioxide and radiating directly to free space, operating for example at 1550 nm wavelength, with an exemplary height of 300 nm, an exemplary period of 1.680 $\mu$m (micrometers or microns) and an exemplary duty cycle of 76.19%, may be around 7.7 $\mu$m (micrometers or microns).

Exemplary parameters and characteristics of the at least one output grating of the photonic integrated circuit can be as follows.

The at least one output grating may also be a first order grating, i.e. with a diffraction order of +/-1. However, the at least one output grating may also be of higher orders.

The grating period of the at least one output grating, i.e. the distance from the center of one groove to the center of the next groove of the grating, may, for example, lie between 0.2 to 5 $\mu$m (micrometers or microns).

The height of the at least one output grating, i.e. the distance from the grating base to the top of the stripes, may lie between 200 and 500 nm.

The duty cycle of the at least one output grating, i.e. the ratio between width of the grooves (or lines) to the period of the grating, may, for example, lie between 0.10 to 0.75.

The etch parameter of the at least one output grating, i.e. the ratio of the depth of a groove of the grating to the total thickness of depth of the grating material, may, for example, lie between 0.20 to 0.75, wherein an etch parameter of 1.0 denotes a fully etched grating.

An exemplary width or mode field diameter (MDF) of the radiation profile of an exemplary silicon-nitride output grating, built on silicon dioxide and radiating directly to free space, operating for example at 1550 nm wavelength, with an exemplary height of 300 nm, an exemplary period of 1.579 $\mu$m (micrometers or microns), an etch parameter of 0.32 and an exemplary duty cycle of 26.73 %, may be around 115 $\mu$m (micrometers or microns).

The photonic integrated circuit may also comprise additional auxiliary gratings, e.g. additional auxiliary input gratings and/or additional output gratings, wherein said e.g. additional auxiliary input gratings and/or said additional output gratings may have parameters similar or identical to the above described parameters.

As previously stated, the at least one output grating and the at least one input grating as well as other gratings, e.g. additional auxiliary input gratings and additional output gratings, may comprise silicon based materials, e.g. may comprise or consist of silicon nitride on silicon dioxide.

All of said gratings can be transmission gratings and all of said gratings can for example be operated at 1550 nm. However, other operating wavelengths are conceivable too.

The possible collimation of the outputted light can be controlled by the mode field diameter of the at least one output grating.

The possible focusing of the outputted light of the at least one output grating can be achieved by apodization, i.e. by varying the grating period along the output grating. This possible apodization can cause the emission angle of the output grating to vary along its length, leading to converging wavevectors and resulting in a focused beam.

The above and herein exemplary described method for reading out a sensing device comprising a photonic integrated circuit may further comprise a self-alignment step for aligning the light source, the photonic integrated circuit and the readout system with respect to each other for maximizing the light signal received by the readout system.

Said possible maximization can be carried out by directly optimizing, e.g. maximizing, the amount of the light signal received or collected by the readout system and/or by optimizing, e.g. maximizing, an alignment function, wherein said alignment function can be a function of the received light signal or a function of a plurality of received light signals.

Herein, the term light signal or received light signal or outputted light signal may also refer to signals that are based on converted light signals, wherein the light signal has been converted to electric signals by the readout system, e.g. voltage signals generated by a photodetector, e.g. photodiodes of a photodetector.

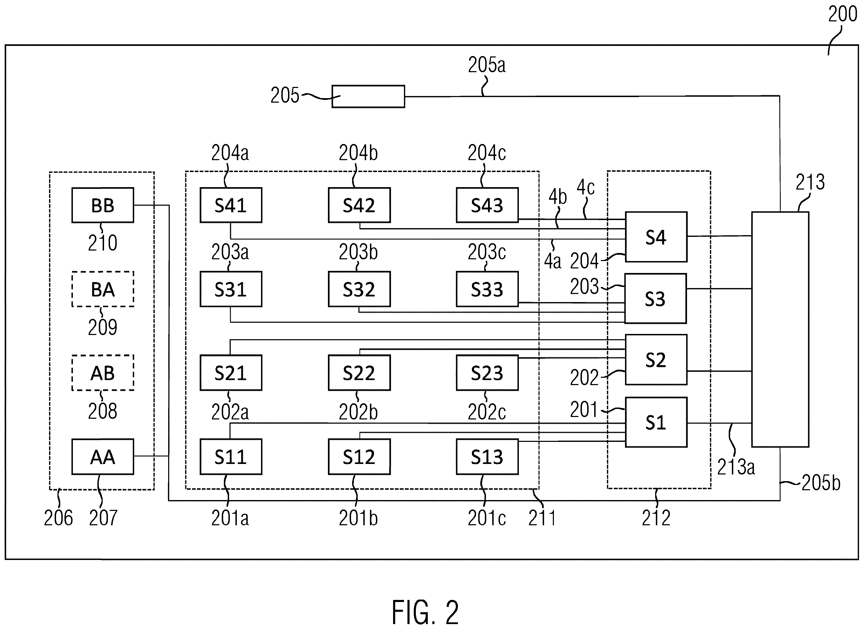

An exemplary possible alignment function is provided and discussed in further detail in the description of Fig. 2.

For optimal aligning of the at least one light source, the photonic integrated circuit and the readout system, to optimize the light coupling efficiency, a rather large area may be systematically scanned to locate the at least one input grating, since compared to the size of the photonic integrated circuit and compared to the size of any possible apertures or windows of the sensing device that provide an optical path to the photonic integrated circuit, the size of the at least one input grating can be rather small. For example, whereas the size of the input grating can be only a few square micrometers ($\mu m2$), the size of the search area, e.g. size of any possible apertures or windows of the sensing device, can be in the order of square millimeters ($mm^2$) or larger.

An exemplary self-alignment method that can be carried out either partially or fully automatically, may comprise multiple steps.

For example, the possible self-alignment step or self-alignment method can comprise the following steps or parts or phases:

- A first phase comprising a first scan wherein the input light beam generated by the at least one light source moves in a continuous way or in a quasi-continuous way, e.g. with a scan step size of a few $\mu m$, e.g. 10 to 20 $\mu m$, or with the smallest possible scan step size, e.g. less than 5 $\mu m$, along a first direction, e.g. following rows along a main direction of at least one window of the sensing device that provides an optical path to the photonic integrated circuit. Said exemplary first direction can be aligned with or can be parallel to the rows of apertures or windows of the sensing device that provide an optical path to the photonic integrated circuit.

During said scan movement, said alignment function based on the light signals received by the readout system can be evaluated at a first frequency, e.g. the data from the first rough scan is stored during the scan movement(s), but the alignment function is evaluated only at the end of the scan movement(s). At the end of the scan movement(s), the evaluated alignment function data can be compared with a threshold value.

For example, when reaching an end along a first direction, e.g. when reaching the end of a row, the values of the alignment function value collected during the scan movement can be compared to said threshold value.

If the collected alignment function values are below the threshold, the beam moves one scan step, e.g. a few $\mu m$, e.g. 10 to 20 $\mu m$, perpendicular to the first direction, thereby jumping to a next row or to a next scanning direction, and a further scan movement in a direction opposite to the previous direction can be performed. The step size of said jump to a further row or to a further scanning direction can be chosen to be smaller than the spot size of the spot of the input light beam on the photonic integrated circuit, e.g. the step size can lie below 20 $\mu m$.

This way, all possible windows or all possible rows of windows of the sensing device can be scanned during said first scan.

This first rough scan with said continuous or quasi-continuous scan movement(s) of the input light beam can cover the length or width of said at least one window or the length(s) of a plurality of windows of the sensing device that allow the inputting of light via the at least one light source onto the photonic integrated circuit. An exemplary length of a possible window may be in the order of several millimeters.

If at least one alignment function value above the threshold is found, a second scan phase can be performed.

- In said second scan phase, the beam follows back the path scanned during the first scan phase towards the position(s) where the first scan phase had identified at least one alignment function value above the threshold. The scan movement of said second scan phase can again be carried out with scan step sizes smaller than the spot size of the spot of the input light beam on the photonic integrated circuit, e.g. step sizes less than 20 $\mu$m. However, the step sizes in this second scan can be larger than the smallest possible scan step size, i.e. the scan movement(s) in this second scan phase can be carried out faster than the scan movement(s) during the first scan phase.

In contrast to the first scan phase, in the second phase the alignment function can be evaluated and compared again with the threshold value at each step.

When an alignment function value higher than the threshold value is found during said second scan phase, the following third and last scan phase can be executed.

- In the third phase, which is the last scan phase, the input beam moves with the smallest scan step size, e.g. a/the smallest step size allowed by a movable stage that can move the at least one light source or the emission point of the at least one light source, e.g. step size of less than 5 $\mu$m. The scan movements can be carried out along two orthogonal directions, e.g. along said first direction and along a direction perpendicular to said first direction, around the position(s) identified during the second scan phase.

Again, the alignment function can be evaluated and compared again with the threshold value at each step.

This scan in two directions can be carried out until both local maxima of the alignment function along the first direction and along the direction perpendicular to said first direction have been reached. Once both maxima have been reached, the input alignment is considered optimal and the self-alignment completed.

The speed with which the scan movements of the above exemplary described three scan phases can be carried out can vary between the different scan phases, e.g. the speed of the scan movements of the second scan phase may be faster than the speed of the first scan phase and/or faster than the speed of the third scan phase.

It is emphasized that the above exemplary described scan phases are exemplary only and other scan phases or other scanning schemes or other scanning patterns for the exemplary alignment or self-alignment method are also possible.

All the above described scan movements of the input light beam generated by the at least one light source can, for example, inter alia be carried out by the movements of a movable stage that is described further below and to which the at least one light source or the emission point of the at least one light source can be mounted.

Said exemplary movable stage can be configured to carry out continuous or quasi-continuous or discrete movements.

To even further facilitate the self-alignment, the photonic integrated circuit may comprise additional auxiliary gratings, e.g. additional auxiliary input gratings and additional output gratings, which may be used only during the alignment or self-alignment.

This can reduce the scan time needed for the alignment. For example, additional auxiliary input gratings can be placed around said input grating, which in such configurations can be referred to as main input grating, at well-defined positions with respect to the input grating, i.e. the main input grating.

Then, once a possible additional input grating has been identified during the alignment scan, the scan can be terminated, and the input light beam generated by the at least one light source, i.e. the light source, can be moved directly to the input grating, i.e. the main input, since the required movement can be precisely determined from the known and found position of the auxiliary input grating, since the position of the input grating is well defined with respect to the position of the auxiliary input grating(s).

In addition or alternatively, the photonic integrated circuit may comprise a plurality of input gratings, i.e. a plurality of main input gratings, e.g. gratings that are similar or equal to the at least one input grating, wherein the light signal inputted to said plurality of input gratings may converge to or may be coupled to a single common waveguide such that if one of the input gratings of the plurality of input gratings is found via an alignment process, e.g. via an alignment process such as described above, the alignment process stops and the alignment scan time can be further reduced.

It is further conceivable that the input gratings of said possible plurality of input gratings can be arranged spatially close to each other, such that a single spot of the light from the at least one light source can excite or cover several or all of the input gratings of the possible plurality of input gratings. Furthermore, it is possible that the light inputted to said plurality of input gratings that can be arranged spatially close to each other may be coupled to or may converge to a single common waveguide. This can inter alia enable coupling more light into the photonic integrated circuit without the need to increase the power of the light source, e.g. without increasing the power of a laser configured as light source.

It is further possible that input gratings can be arranged spatially separate but close to each other and that each input grating is coupled to a specific other component or to a specific group of other components on the photonic integrated circuit, e.g. to a specific biosensor or to a group of biosensors on the photonic integrated circuit and/or to a specific alignment grating or to a group of alignment gratings on the photonic integrated circuit.

This exemplary configuration may allow a more efficient coupling of light into the photonic integrated circuit and at the same time avoid or minimize potential interference problems between input gratings.

In the above and herein exemplary described method for reading out a sensing device comprising a photonic integrated circuit, the light that is inputted into at least one input grating of the photonic integrated circuit can be inputted, e.g. via free space, by at least one coherent light source, e.g. a laser, in particular a continuous-wave fiber laser.

An exemplary system that can be configured for reading out a sensing device comprising a photonic integrated circuit according to any of the above and herein exemplary method steps may comprise one, some or all of the following components:

- At least one light source;
- a sensing device comprising a photonic integrated circuit, said photonic integrated circuit comprising at least one input grating and at least one output grating;
- a readout system.

Said at least one light source can be configured for inputting light, e.g. via free space, into the at least one input grating of the photonic integrated circuit.

Said readout system can be configured for collecting a light signal outputted via free space by the at least one output grating of the photonic integrated circuit.

As previously indicated, such a system is inter alia more robust, more stable and more efficient than current systems, since the light signal output by the at least one output grating of the photonic integrated circuit is implemented entirely and exclusively in free space, i.e. without any waveguides or fiber-optic cables.

Such a system also allows implementing the inputting of light via said at least one light source entirely and exclusively in free space, which further can improve the robustness, stability, efficiency and compactness of the system. Herein, the efficiency improvement can in particular relate to avoiding fiber-optic coupling losses.

The at least one output grating of the photonic integrated circuit can be configured for outputting the light signal in an output direction that is parallel or not parallel to the normal vector of the surface of the photonic integrated circuit.

The at least one input grating and the at least one output grating of said exemplary system can have the exemplary parameters and characteristics that were exemplary described earlier in the context of the exemplary method for reading out the sensing device.

For example, said parameters and characteristics can be used to control the direction and angle of the light outputted by the at least one output grating.

Furthermore, the light source can be configured for inputting the light in an input direction that is parallel or not parallel to the normal vector of the surface of the photonic integrated circuit.

The at least one light source and the readout system can be arranged such that the inputting of the light and the outputting of the light signal can be implemented on the same side with respect to the same surface, e.g. the top surface or bottom surface, of the photonic integrated circuit.

This can inter alia further improve the spatial compactness of the system comprising the at least one light source and the readout system.

However, it is also possible that the at least one light source and the readout system are arranged on opposite sides of the photonic integrated circuit, i.e. with the sensing device comprising the photonic integrated circuit being located between the at least one light source and the readout system.

Furthermore, the at least one light source and the readout system can be arranged such that, as previously indicated, the angle between the input direction and the normal vector of the surface of the photonic integrated circuit, also referred to as input direction angle, can be equal or not equal to the angle between the output direction of the outputted light signal and the normal vector of the surface of the photonic integrated circuit, also referred to as output direction angle.

As also previously indicated, it is further conceivable that the output direction of the light signal outputted via free space by at least one output grating of the photonic integrated circuit is equal or parallel to the normal vector of the photonic integrated circuit.

The readout system could then be implemented as an on-axis readout system, wherein the readout system could be aligned with the optical axis of the output grating.

However, off-axis orientations and arrangements between the output grating and the readout system are possible too.

The at least one light source of the above and herein exemplary described system and method can be a coherent light source, e.g. a laser, in particular a continuous-wave fiber laser, e.g. a 1550 nm continuous-wave fiber laser emitting an optical power in the range of 20 mW to 100 mW.

The readout system can comprise a photodetector, wherein said photodetector may comprise a one-dimensional or two-dimensional photodiode array, e.g. a 4x4 photodiode array.

Each photodiode of said possible photodiode array can have a surface area that can be larger than the beam size or larger than a beam section size of the light signal outputted by the at least one output grating of the photonic integrated circuit.

This can ensure that readout signals do not significantly change under minor misalignments of the photodiodes regarding the photonic integrated circuit.

Furthermore, said possible photodiode array may further comprise a plurality of transimpedance amplifiers, wherein each transimpedance amplifier can be directly or indirectly connected to a photodiode of the photodiode array.

Alternatively or in addition, the photodetector may comprises a charge-coupled device image sensor or a complementary-metal-oxide-semiconductor image sensor.

The possible use of such image sensor(s) can further increase the tolerance of the systems against misalignments between the light signal outputted by the at least one output grating of the photonic integrated circuit and the readout system.

The possible image sensor(s) may have a frame rate of at least 60 Hz.

The at least one light source can be mounted on a movable stage.

In particular, the emission point of the light source and/or the input optical system can be mounted on a movable stage.

Alternatively or in addition, the readout system can be mounted on a movable stage.

Alternatively or in addition, the sensing device can be mounted on a movable stage.

Said possible movable stage(s) can be one-dimensional (1D), e.g. one-axis, two-dimensional (2D), e.g. two-axis, or three-dimensional (3D), e.g. three-axis, movable stages, in particular one-axis or two-axis or three-axis piezoelectric stages, or a combination thereof, e.g. a two-dimensional (2D), e.g. two-axis, movable stage could be combined with a one-dimensional (1D), e.g. one-axis, movable stage.

This can facilitate the optical alignment between the at least one light source, the input and output grating(s) of the photonic integrated circuit of the sensing device and the readout system, thereby improving the performance and efficiency of the system.

As previously indicated, the readout system can be arranged and oriented such that the light signal, which is outputted via free space by the at least one output grating of the photonic integrated circuit and that is collected by the readout system, can hit the readout system at an angle that is orthogonal to the surface of the readout system.

Such a possible arrangement and orientation of the readout system with respect to the photonic integrated circuit of the sensing device can, for example, be inter alia achieved by a corresponding configuration and movement of the said possible movable stage(s) to which the readout system and/or the sensing device can be mounted.

As also previously indicated, the photonic integrated circuit may comprise a plurality of input gratings, wherein the input gratings of said possible plurality of input gratings can be arranged spatially close to each other, such that a single spot of the light from the at least one light source can excite or cover several or all of the input gratings of the possible plurality of input gratings.

Furthermore, it is possible that the light signal inputted to said plurality of input gratings can be coupled to or may converge to a single common waveguide. This can inter alia enable coupling more light into the photonic integrated circuit without the need to increase the power of the light source, e.g. without increasing the power of a laser configured as light source.

As previously indicated, the photonic integrated circuit may comprise additional auxiliary gratings, e.g. additional auxiliary input gratings and additional output gratings, which can be used during one of the above exemplary described self-alignment steps.

As also previously indicated, it is also possible that said plurality of input gratings can each be coupled to different other components, e.g. sensors and/or alignment gratings.

All operations of the system for reading out a sensing device comprising a photonic integrated circuit, e.g. operating the light source(s), including moving the light source(s), operating the readout system, including moving the readout system, and operating and moving possible movable stages, can be partially or fully computer-controlled by a control-and-operation software installed on a digital processor unit or a microcontroller of a control unit that is in communication, e.g. wireless communication, with said system. Said control unit can be the same control unit that was introduced earlier for carrying out the method for reading out a sensing device.

Said control unit can be integrated in one of the components of the system, e.g. the readout system, or said control unit can be implemented as a separate external unit.

The exemplary system for reading out a sensing device may further comprise an output optical system configured for directing the light signal outputted via free space by the at least one output grating of the photonic integrated circuit onto the readout system.

This can further improve the light signal collection efficiency of the system.

Said exemplary optional output optical system can comprise one or more optical elements, e.g. lenses, prisms, mirrors or reflectors.

For example, the output optical system can comprise an afocal lens system, in particular an afocal lens system with a pair of optical elements, e.g. two lenses, wherein, for example, in Keplerian design the distance between said optical elements is equal to the sum of the focal length of each optical element.

Alternatively, it is possible that the output optical system can be of Galilean design with a pair of optical elements, e.g. two lenses, e.g. a negative lens and a positive lens, wherein the distance between said optical elements is equal to the difference of the focal lengths of the two optical elements. Said possible Galilean design can further improve the compactness of the possible output optical system.

Such exemplary configurations for the possible output optical system allow optimizing, e.g. reduce, the area on the photonic integrated circuit required for the output gratings, without compromising the size of the photodetector.

An exemplary sensing device comprising a photonic integrated circuit as described above and configured for being read out as described above, may therefore comprise the following components:

- A photonic integrated circuit as described above, e.g. comprising at least one input grating configured for receiving light from at least one light source and at least one output grating configured for outputting a light signal via free space, and wherein the photonic integrated circuit further comprises at least one biosensor, e.g. a photonic biosensor, configured for detecting a target analyte in a fluidic sample and configured for generating said light signal to be outputted by the at least one output grating.

- A fluidic cartridge comprising at least one fluidic channel configured for transporting the fluidic sample to the at least one biosensor of the photonic integrated circuit.

The exemplary sensing device can be implemented as being a/the fluidic cartridge.

In other words, the exemplary sensing device can be or can accommodate a/the fluidic cartridge together with a/the photonic integrated circuit.

To allow the inputting of light via the at least one light source onto the at least one input grating and to allow the outputting of the light signal by the at least one output grating, the sensing device and/or the fluidic cartridge may comprise one or more optical transparent windows, e.g. an input window and an output window.

Said one or more optical transparent windows can provide optical paths to the gratings of the photonic integrated circuit, in particular to the at least one input grating and to the at least one output grating and/or to possible other auxiliary gratings, e.g. alignment gratings, or to other components of the photonic integrated circuit.

As previously indicated, said biosensors or photonic biosensors of the photonic integrated circuit can be inter alia implemented as interferometric sensors, e.g. Mach-Zehnder interferometric sensors that can be combined with multimode interferometers, e.g. 2x3 multimode interferometers.

The photonic integrated circuit may comprise an array of such biosensors or photonic biosensors.

The following figures illustrate exemplary:

Fig.1: Exemplary method for reading out a sensing device comprising a photonic integrated circuit
Fig. 2: Exemplary schematic layout of a photonic integrated circuit

Fig. 3a: Exemplary light source and sensing device
Fig. 3b: Exemplary light source and sensing device mounted on movable stage(s)
Fig. 3c: Exemplary system reading out a sensing device comprising a photonic integrated circuit
Fig. 3d: Exemplary alternative view of the system of Fig. 3c

The Figures serve to exemplary illustrate certain technical aspects of some features of the subject-matter exemplary described above.

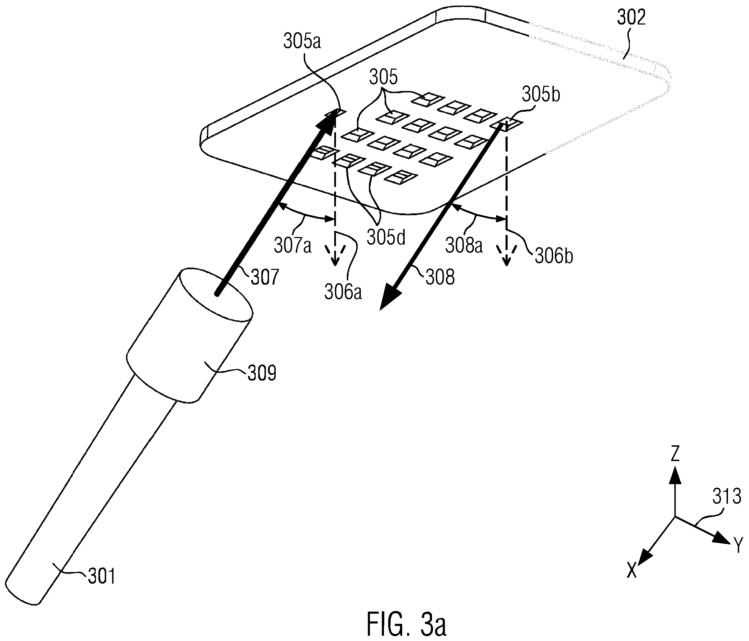

Figs. 3a to 3d exemplary show configurations wherein the input direction angle 307a of the light 307 inputted via the at least one light source and the output direction angle 308a of the outputted light signal 308 are equal, e.g. wherein the input vector and output vector are antiparallel. However, as described previously, other configurations of the input direction angle and the output direction angle are conceivable too.

However, as further exemplary illustrated in Figs. 3a to 3d, the input vector 307 of the light inputted via the at least one light source into the at least one input grating of the photonic integrated circuit and the output vector 308 of the outputted light signal can be not parallel to the surface, e.g. the top surface or bottom surface of the photonic integrated circuit, i.e. the top surface or bottom surface of the sensing device 302 comprising the photonic integrated circuit.

Stated differently, the input angle (or input direction angle) 307a and the output angle (or output direction angle) 308a, measured with respect to a normal vector 306a, 306b of the surface of the sensing device 302 and that is parallel to the surface of the photonic integrated circuit housed by the sensing device 302, can always be less than 90°. For example, in the exemplary configurations shown in Figs. 3a to 3d, the input vector 307 can be antiparallel to the output vector 308 and the input angle 307a and the output angle 308a are less than 90°, e.g. 45°.

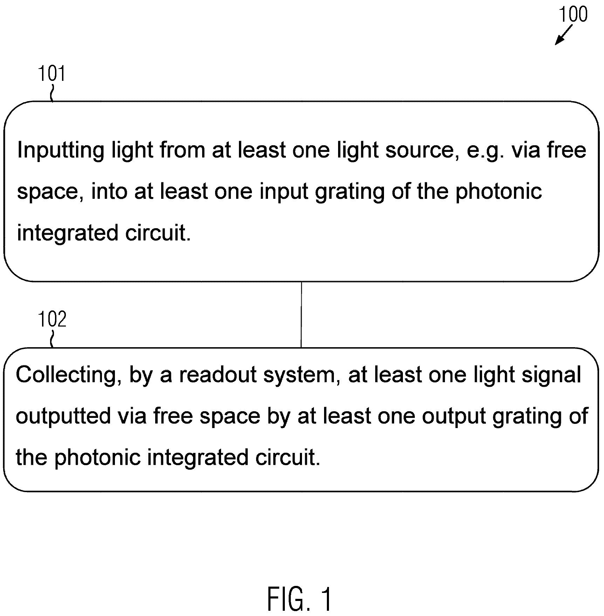

**Fig. 1** shows an exemplary flow diagram of an exemplary method 100 for reading out a sensing device comprising a photonic integrated circuit and which comprises a first step 101 of inputting light from at least one light source, e.g. via free space, into at least one input grating of the photonic integrated circuit and a second step 102 of collecting, by a readout system, at least one light signal outputted via free space by at least one output grating of the photonic integrated circuit.

**Fig. 2** shows an exemplary non-limiting schematic layout of a photonic integrated circuit 200 or photonic chip that can be read out via the above described exemplary method steps and with an above exemplary described system.

The photonic integrated circuit 200 can comprise at least one input grating 205 that can receive light inputted by a light source, such as described above. Said exemplary input grating 205 can feed or propagate the received light via a path 205a, e.g. a waveguide, to an exemplary light power distribution component 213, wherein said exemplary light power distribution component 213 can further distribute the received light to an optional exemplary alignment region 206, e.g. via path(s) 205b, e.g. waveguide(s), and/or to an exemplary sensor region 212 or sensor array, e.g. via paths 213a, e.g. waveguide(s), of the photonic integrated circuit 200.

Said exemplary light power distribution component 213 can, for example, comprise or be formed by a combination or succession of power distribution elements such as multimode interference (MMI) elements, directional couplers, or Y-branches.

For example, the exemplary light power distribution component 213 can be formed by a succession of MMIs. For example, to provide four outputs with the same power, e.g. outputs to the four exemplary photonic biosensors 201 (S1), 202 (S2), 203 (S3) and 204 (S4), a single 1x4 MMI or a two-level tree composed of 3 1x2 MMIs can be used. Using said exemplary two-level tree can provide a more robust design, as it can be more tolerant to manufacturing inaccuracies.

It is further possible that the photonic integrated circuit 200 may comprise an additional 1x2 MMI that is arranged prior to the exemplary light power distribution component 213, e.g. between the exemplary input grating 205 and the exemplary light power distribution component 213, such that a part of the inputted light (or a part of the inputted power) is directed to the exemplary alignment region 206 without passing through any sensor of the exemplary sensor region 212, i.e. bypassing the sensor region 212.

Alternatively, it is possible that the exemplary input grating 205 can be coupled to two paths (not shown), e.g. two waveguides, to distribute the received light directly to the exemplary alignment region 206 and/or to the exemplary sensor region 212.

Furthermore, as previously indicated, the photonic integrated circuit may comprise a plurality of input gratings (not shown) similar to input grating 205 and arranged spatially close to the input grating 205 such that, for example, a single spot of the light or a single beam from the light from the at least one light source can excite or cover several or all of the input gratings of the possible plurality of input gratings.

The number of gratings of the photonic integrated circuit 200 is exemplary only.

The exemplary sensor region 212 or exemplary sensor array of the photonic integrated circuit 200 can comprise a plurality of sensors, e.g. photonic biosensors. In the non-limiting illustrated example, the sensor region 204 comprises four exemplary photonic biosensors 201 (S1), 202 (S2), 203 (S3) and 204 (S4).

As previously described, said photonic biosensors can, for example, each be implemented as interferometric sensors, e.g. Mach-Zehnder interferometric sensors that can be combined with multimode interferometers, e.g. 1x2 and/or 2x3 multimode interferometers. However, other photonic biosensor types or configurations can be used as well.

In the shown example, each sensor 201 (S1), 202 (S2), 203 (S3) and 204 (S4) comprises a Mach-Zehnder interferometric sensor with two arms (not shown), i.e. a reference arm and a sensing arm, in combination with a 2x3 multimode interferometer (not shown) for providing three replicas of the interferometric signal from the Mach-Zehnder interferometric sensor, with a phase shift, e.g. a 120° degrees phase shift, between said replicated interferometric signal. Hence, each sensor 201 (S1), 202 (S2), 203 (S3) and 204 (S4) can have three light signal output ports.

To avoid unnecessary cluttering, only the three output ports of sensor 204 (S4) have been exemplary annotated with reference numerals 4a, 4b and 4c.

Said exemplary photonic biosensors 201 (S1), 202 (S2), 203 (S3), 204 (S4) can interact with a liquid sample for generating a light signal via an evanescent wave sensing mechanism. For example, a liquid sample to be analyzed can be transported to the photonic biosensors via fluidic channels of a sensing device (not shown), e.g. a fluidic cartridge, which comprises or accommodates the photonic integrated circuit 200.

The output ports of each sensor 201 (S1), 202 (S2), 203 (S3), 204 (S4) can each be connected to corresponding output gratings that can for example be arranged in a central region 211 of the photonic integrated circuit 200. Said output gratings can be arranged in a matrix, e.g. a 3x4 matrix.

For example, the output ports of sensor 204 (S4) can be connected with / can be in communication with output gratings 204a (S41), 204b (S42), 204c (S43), the output ports of sensor 203 (S3) can be connected with / can be in communication with output gratings 203a (S31), 203b (S32), 203c (S33), the output ports of sensor 202 (S2) can be connected with / can be in communication with output gratings 202a (S21), 202b (S22), 202c (S23), and the output ports of sensor 201 (S1) can be connected with / can be in communication with output gratings 201a (S11), 201b (S12), 201c (S13).

It is to be noted that the number of biosensors and output gratings is exemplary only and other numbers or other matrix sizes and arrangements of the biosensors and output gratings are possible too. Furthermore, it is to be noted that the exemplary photonic integrated circuit 200 may comprise additional further components such as a temperature sensor (not shown) and further output gratings.

The propagation of light and light signals among or between the described exemplary components of the photonic integrated circuit 200, as inter alia exemplary illustrated by paths/lines 205a, 205b, 4a, 4b, 4c, can be implemented as waveguides and/or fibers and/or as free-space paths.

The optional exemplary alignment region 206 on the photonic integrated circuit 200 for facilitating the alignment between a light source (not shown), a sensing device (not shown) that comprises the photonic integrated circuit 200 and a readout system (not shown) for reading out the sensing device (not shown), may comprise reference regions that do not comprise any light-emitting structures and regions that comprise light-emitting structures. In the shown example, reference regions 208 (AB) and 209 (BA) are empty, i.e. they do not comprise any light-emitting structures, whereas regions 207 and 210 each comprise a light-emitting alignment grating, i.e. alignment grating AA and alignment grating BB. Said exemplary alignment gratings AA, BB can radiate light to free space, wherein said light was received from the input grating 205 via path(s) 205b without passing through any sensors.

The exemplary output gratings 201a (S11), 201b (S12), 201c (S13), 202a (S21), 202b (S22), 202c (S23), 203a (S31), 203b (S32), 203c (S33), 204a (S41), 204b (S42), 204c (S43), as well as the exemplary optional alignment gratings AA, BB, can be configured to radiate or emit collimated light signals, e.g. collimated parallel light signals, and/or focused light signals into free space towards a readout system (not shown).

As indicated previously, said exemplary photonic integrated circuit 200 may be accommodated by or integrated into a sensing device (not shown), e.g. a fluidic cartridge. Said sensing device can comprise apertures or optical transparent windows that are arranged and configured for providing free optical paths to and from the gratings of the photonic integrated circuit 200, i.e. to the input grating 205, the output gratings 201a (S11), 201b (S12), 201c (S13), 202a (S21), 202b (S22), 202c (S23), 203a (S31), 203b (S32), 203c (S33), 204a (S41), 204b (S42), 204c (S43), and to the alignment gratings AA, BB, as well as to the reference regions AB and BA, which do not comprise any light-emitting structures.

As previously indicated above, the system for reading out a sensing device comprising a photonic integrated circuit such as for example photonic integrated circuit 200, can be configured for an automatic self-alignment procedure for aligning the light source, the photonic integrated circuit and the readout system with respect to each other for maximizing the light signal received by the readout system.

Such exemplary self-alignment can make use of an alignment function, wherein said alignment function can be a function of the received light signal or a function of a plurality of received light signals.

As also previously mentioned, the term light signal or received light signal or outputted light signal may also refer to signals that are based on converted light signals, wherein the light signal has been converted to electric signals by the readout system, e.g. voltage signals generated by a photodetector, e.g. photodiodes of a photodetector.

For the exemplary photonic integrated circuit 200 a possible alignment function AFthat makes use of a plurality of received light signals S, e.g. four light signals, can be defined as follows.

$$AF = S_{AA} + S_{BB} - \alpha(S_{AB} + S_{BA}) - \beta|S_{AA} - S_{BB}|$$

Herein, $S_{AA}$ is the light signal received from the AA alignment grating, $S_{BB}$ is the light signal received from the BB alignment grating, $S_{AB}$ is the light signal received from reference region 208, and $S_{BA}$ is the light signal received from reference region 209. The term $|S_{AA} - S_{BB}|$ denotes the absolute value of $S_{AA} - S_{BB}$.

It is to be noted that, while reference regions 208, 209 do not comprise light-emitting structures themselves, they still can emit stray light leaking into said regions from other parts of the photonic integrated circuit 200 or the sensing device comprising the photonic integrated circuit.

The parameters $\alpha$ and $\beta$ are constants that can be adjusted for optimizing the filtering of stray light and ensuring a sufficient contrast between the light signal from the input grating and the environment.

This exemplary alignment function AF provides a robust function that can be used in self-alignment steps and scan movements as described above, e.g. during the above described exemplary scan movements or scan phases, said alignment function AF can be evaluated at all scan steps to provide feedback for achieving a robust and optimal alignment.

This exemplary alignment function AF maximizes the signal read from the AA and BB gratings and provides a balance between them, while also subtracting most of the stray light common to all signals.

As also previously mentioned, the term light signal or received light signal or outputted light signal may also refer to signals that are based on converted light signals, wherein the light signal has been converted to electric signals by the readout system, e.g. voltage signals generated by a photodetector, e.g. photodiodes of a photodetector.

Hence, in the exemplary alignment function AF defined above, the light signals $S_{AA}$, $S_{BB}$, $S_{AB}$, $S_{BA}$ can be understood as representing voltage signals of the readout system measured in volt.

**Fig. 3a** shows an exemplary perspective view of an exemplary light source 301 and an exemplary sensing device 302. Said exemplary sensing device 302 can comprise or accommodate a photonic integrated circuit (not visible), e.g. photonic integrated circuit 200 of Fig. 2. Said exemplary sensing device 302 can further be implemented as a fluidic cartridge comprising at least one fluidic channel configured for transporting a fluidic sample to at least one biosensor of the photonic integrated circuit for detecting a target analyte in said fluidic sample.

As shown, the exemplary sensing device 302 can have a flat top surface and a flat bottom surface which can be parallel to the top surface and the bottom surface of the photonic integrated circuit, e.g. the photonic integrated circuit 200 of Fig. 2, housed by the sensing device 302.

The exemplary sensing device 302 can comprise a plurality of apertures or windows 305 that provide optical paths into the sensing device 302 and onto the photonic integrated circuit, e.g. onto the at least one input grating of the photonic integrated circuit, and that provide optical paths out of the sensing device 302 for signals emitted by the photonic integrated circuit, e.g. by the at least one output grating and at least one alignment grating, so that they can be collected or read by a readout system (not shown).

The exemplary light source 301 can be configured for generating a collimated or focused light beam 307 for inputting light via free space, into at least one input grating of the photonic integrated circuit via one of the apertures or windows 305.

The exemplary light source 301 can be a coherent light source, e.g. a laser, in particular a continuous-wave fiber laser.

In the shown example, the exemplary light source 301 further comprises an exemplary input optical system 309 with an exemplary focusing lens for focusing the light beam 307 to be inputted onto the at least one input grating of the photonic integrated circuit of the sensing device 302 via the exemplary aperture or window 305a of the sensing device 302.

The light 307 that is inputted by the light source 301 into at least one input grating of the photonic integrated circuit via the exemplary aperture or window 305a of the sensing device 302, is exemplary inputted at an input angle 307a (input direction angle) with respect to a normal vector 306a of the photonic integrated circuit (which can correspond to a normal vector of the sensing device 302).

The reference numeral 307 also can be considered as marking an input vector, which can be defined by the input direction and input direction angle of the light inputted via the light source 301 into at least one output grating of the photonic integrated circuit of the sensing device 302.

Said exemplary normal vector 306a can coincide with or can be parallel to the Z-axis of the exemplary three-dimensional orthogonal reference coordinate system 313 spanned by the exemplary X, Y and Z axes.

The reference numeral 308 exemplary marks a light signal outputted by the photonic integrated circuit via the exemplary aperture or window 305b of the sensing device 302. More specifically, reference numeral 308 can be considered as marking an output vector, which can be defined by the output direction and output direction angle of the outputted light signal.

Said exemplary outputted light signal 308 may be a light signal generated and outputted by least one output grating of the photonic integrated circuit, e.g. by one of the output gratings 201a (S11), 201b (S12), 201c (S13), 202a (S21), 202b (S22), 202c (S23), 203a (S31), 203b (S32), 203c (S33) of the photonic integrated circuit 200, or by a possible alignment grating, e.g. alignment gratings AA, BB of the photonic integrated circuit 200.

The outputted light signal 308 can be exemplary outputted at an angle 308a (output direction angle) with respect to a/the normal vector 306b of the photonic integrated circuit, which can be the same as normal vector 307a.

In the shown example, the input angle 307a and the output angle 306b can be equal.

In other words, the input vector 307 can be antiparallel to the output vector 308.

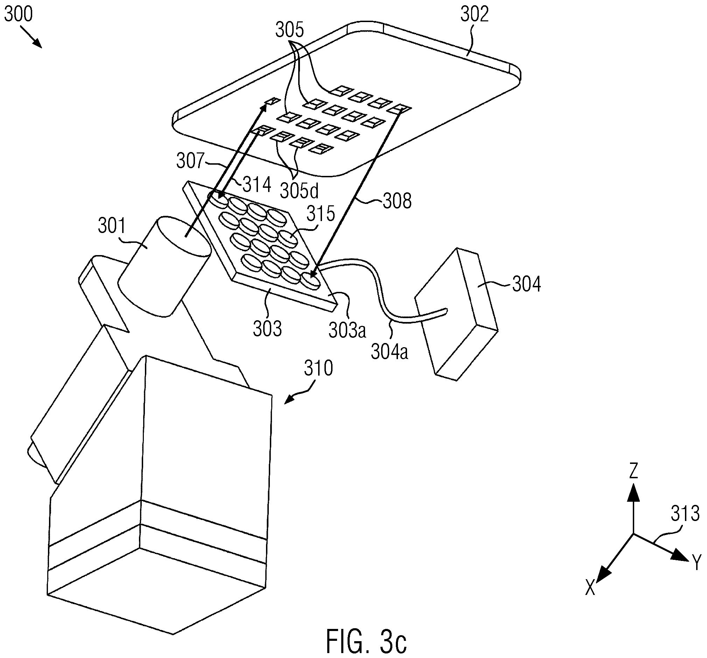

The outputted light signal 308 can be collected by a (not shown) readout system, which, for example, can be a readout system as shown in Fig. 3c.

The reference numeral 305d marks exemplary apertures or windows that provide free optical paths to exemplary reference regions AB, BA (shown in Fig. 2) on the photonic integrated circuit which do not comprise any light-emitting structures.

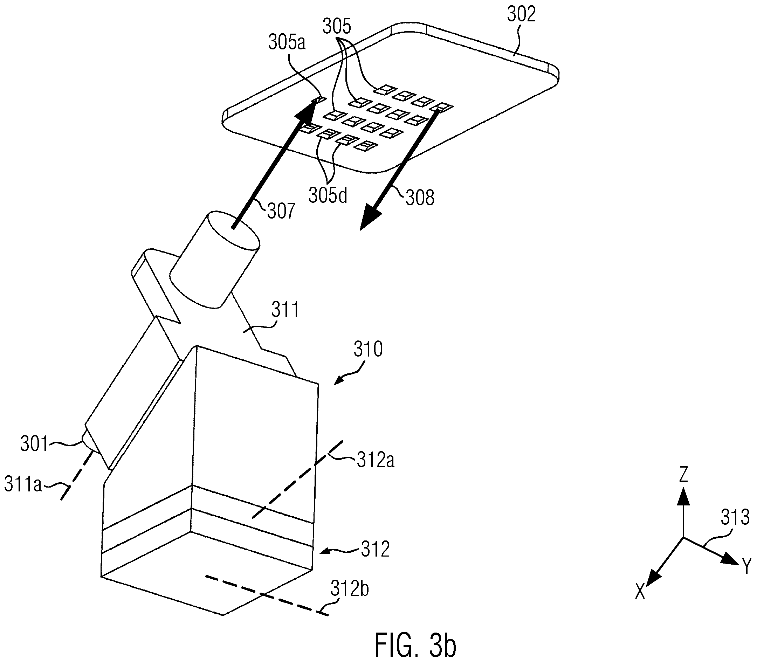

**Fig. 3b** shows an exemplary different perspective view of the exemplary light source 301 and the exemplary sensing device 302 of Fig. 3a, wherein the light source 301 is exemplary mounted to an exemplary movable stage 310, such that the exemplary light source 301 can be moved with respect to the sensing device 302.

Said stage 310 can itself comprise further movable stages 311, 312 and components.

In particular, stage 310 can comprise an exemplary one-axis stage 311, which can provide movements along the exemplary axis 311a, and an exemplary two-axis stage 312, which can provide movements along the exemplary axis 312a and/or along the exemplary axis 312b. In other words, the stage 312 can provide movements in the plane spanned by axes X and Y of exemplary reference coordinate system 313.

It is further possible that stage 311 can be mounted pivotable with respect to stage 312 to further increase the degree of freedom of possible movement for the light source 301 during possible exemplary self-alignment steps.

Alternatively or in addition, it is possible that the sensing device 302 can be mounted on a movable stage (not shown) and/or that the readout system (not shown) can be mounted on a movable stage (not shown).

As in Fig. 3a, the reference numeral 305 marks exemplary apertures or windows that can provide optical paths to and from the photonic integrated circuit (not shown), e.g. photonic integrated circuit 200, of the sensing device 302, and the reference numeral 307 exemplary marks the input vector 307 of light inputted by the light source 301 into/onto at least one input grating of the photonic integrated circuit of the sensing device via the exemplary aperture or window 305a of the sensing device 302.

The reference numeral 305d marks again exemplary apertures or windows that provide free optical paths to exemplary reference regions AB, BA on the photonic integrated circuit (shown in Fig. 2) of the sensing device 302 which do not comprise any light-emitting structures.

Furthermore, the exemplary reference coordinate system 313 can be the same as in Fig. 3a.

**Fig. 3c** shows an exemplary similar perspective view of the exemplary light source 301 and the exemplary sensing device 302 of Fig. 3a, wherein the light source 301 is again mounted to the stage 310 of Fig. 3b. This Fig. 3c further shows an exemplary readout system 303 that is arranged such that it can collect at least one light signal outputted via free space from the photonic integrated circuit, e.g. from an output grating and/or from an alignment grating of the photonic integrated circuit.

Hence, Fig. 3c illustrates an exemplary system 300 for reading out a sensing device 302 comprising a photonic integrated circuit, e.g. photonic integrated circuit 200.

In the example shown, the exemplary readout system 303 collects two output signals, i.e. a light signal 308 outputted via free space by an output grating of the photonic integrated circuit and a light signal 314 outputted via free space by an alignment grating of the photonic integrated circuit.

The light signal 308 can correspond to the outputted light signal 308 in Fig. 3a and Fig. 3b.

The output direction and output angle of light signal 308 can be the same as the output direction and output angle of light signal 314.

As in Fig. 3a and Fig. 3b, the output vector of the light signal 308, as well as the output vector 314, can be antiparallel to the input vector of the light beam 307 inputted from the light source 301 into an input grating of the photonic integrated circuit.

The exemplary readout system 303 can comprise a photodetector, e.g. a two-dimensional photodiode array 315, and the readout system 303 can be configured to match the output geometry of the gratings of the photonic integrated circuit. For example, if the gratings, e.g. the output gratings and the alignment grating(s), of the photonic integrated circuit are arranged in a matrix, e.g. a 4x4 matrix, the photodiodes of the two-dimensional photodiode array 315 could be arranged in a similar matrix, e.g. a similar 4x4 matrix.

The exemplary readout system 303 can be arranged such that the readout system surface 303a that faces the sensing device 302 and that comprises the photodetector, e.g. the two-dimensional photodiode array 315, can be orthogonal to the output vector of the at least one light signal 308 outputted via free space from the photonic integrated circuit of the sensing device 302 and also can be orthogonal to the output vector of light signal 314.

In other words, the surface of the exemplary two-dimensional photodiode array 315 can be arranged such that the output vectors of any light signals outputted by the photonic integrated circuit of the sensing device 302, e.g. light signals 308, 314, are orthogonal to the surface of the exemplary two-dimensional photodiode array 315.

To facilitate the spatial arrangement and orientation of the readout system 303 with respect to the sensing device, the readout system 303 may be mounted to a movable stage (not shown), similar to the exemplary movable stage 310 to which the light source 301 or the emission point of the light source can be mounted.

As previously stated, the geometry and arrangement of the apertures or windows 305 of the sensing device 302 can match the geometry and arrangement of the output and alignment gratings of the photonic integrated circuit, i.e. the apertures or windows 305 of the sensing device 302 can provide optical paths between the output and alignment gratings of the photonic integrated circuit (not shown), e.g. photonic integrated circuit 200, and the photodiodes of the photodiode array 315.

The readout system 303 can be further connected to a printed circuit board 304, e.g. via a cable 304a. For example, said possible printed circuit board may comprise a plurality of transimpedance amplifiers, wherein each transimpedance amplifier can be directly or indirectly connected to a photodiode of the photodiode array of the photodetector of the readout system 303.

However, in addition or alternatively, it is also possible to apply multiplexation of one or more transimpedance amplifiers, wherein a single transimpedance amplifier couples to several different photodiodes.

For completeness, it is noted that the readout system 303 is arranged such as not to block any light inputted from the light source 301 into the photonic integrated circuit of the sensing device 302.

The orientation of the readout system 303 can be such that the output vector 308 is antiparallel to a normal vector of the surface of the readout system 303 comprising the photodetector.

For completeness, it is noted that the readout system 303 is arranged such as to not block any light emitted by the light source 301, i.e. the readout system 303 does not obstruct the path for inputting the light from the light source 301 via free space, into at least one input grating of the photonic integrated circuit of the sensing device 302.

The exemplary reference coordinate system 313 can be the same as in Fig. 3a and as in Fig. 3b.

It is further noted that all operations, e.g. operating the light source 301, operating the sensing device 302, operating the readout system 303 and operating the stage 310 can be carried out by a programmable control unit, which can correspond to the control unit introduced in the general part of the description.

As in Fig. 3a and Fig. 3b, the reference numeral 305d again marks exemplary apertures or windows that provide free optical paths to exemplary reference regions AB, BA on the photonic integrated circuit (shown in Fig. 2) of the sensing device 302 which do not comprise any light-emitting structures.

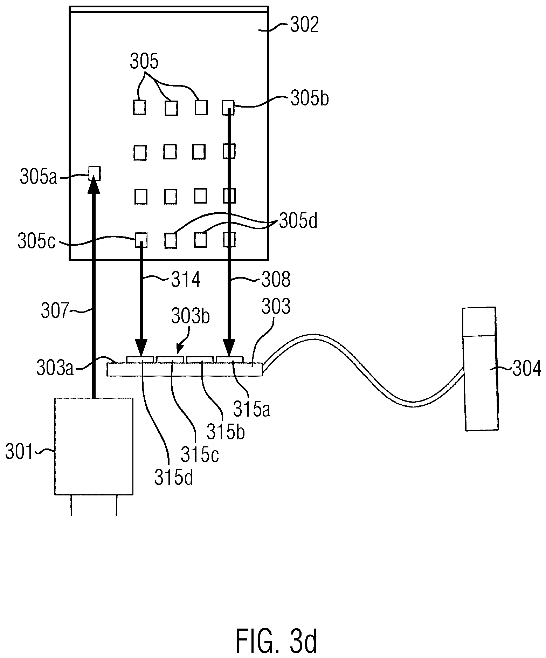

**Fig. 3d** provides an exemplary alternative view of the system 300 of Fig. 3c, wherein the readout system 303 exemplary is shown comprising the exemplary photodiode array 315, e.g. a 4x4 photodiode array, wherein a first row of photodiodes 315a, 315b, 315c and 315d can be seen from the side. In this exemplary configuration, the exemplary light outputted along output vector 308 via aperture 305b, e.g. a light signal outputted via free space by an output grating of a photonic integrated circuit, e.g. photonic integrated circuit 200, can be collected by photodiode 315a of said first row. The exemplary light outputted along output vector 314 via aperture 305c, e.g. light signal outputted via free space by an alignment grating of the photonic integrated circuit, e.g. photonic integrated circuit 200, can be collected by a photodiode of another row, e.g. a photodiode in the last row (not shown) of photodiode array 315.

As previously stated, the geometry and arrangement of the exemplary photodiode array 315 can match the geometry and arrangement of the apertures or windows 305 of the sensing device 302 and the geometry and arrangement of the output and alignment gratings of the photonic integrated circuit, i.e. the apertures of the sensing device 302 can provide optical paths between the output and alignment gratings of the photonic integrated circuit and the photodiodes of the photodiode array 315.

The light signals collected by the photodiode array 315 can then be converted to voltage signals, which can be further converted by an analog-to-digital converter for being further processed by the previously mentioned control unit (not shown).

As in Fig. 3a, Fig. 3b and Fig. 3c, the reference numeral 305d again marks exemplary apertures or windows that provide free optical paths to exemplary reference regions AB, BA on the photonic integrated circuit (shown in Fig. 2) of the sensing device 302 which does not comprise any light-emitting structures.

Followed by Figures Fig. 1, Fig. 2, Fig. 3a, Fig. 3b, Fig. 3c and Fig. 3d, wherein the reference numerals are as follows.

100 Exemplary method for reading out a sensing device

101, 102 Exemplary method steps

200 Exemplary photonic integrated circuit, exemplary photonic chip

201 Exemplary first sensor, exemplary first biosensor

201a, 201b, 201c Exemplary output gratings

202a, 202b, 202c Exemplary output gratings

203a, 203b, 203c Exemplary output gratings

204a, 204b, 204c Exemplary output gratings

202 Exemplary second sensor, exemplary second biosensor

203 Exemplary third sensor, exemplary third biosensor

204 Exemplary fourth sensor, exemplary fourth biosensor

205 Exemplary input grating

205a Exemplary line/path for inputting light to the photonic integrated circuit, e.g. path to exemplary light signal power distribution component

205b Exemplary line/path for inputting light to the exemplary sensors

206 Exemplary alignment region

207 Exemplary region with alignment grating/exemplary alignment grating

208 Exemplary alignment reference region

209 Exemplary alignment reference region

210 Exemplary region with alignment grating/exemplary alignment grating

211 Exemplary central region, exemplary output region of photonic integrated circuit

212 Exemplary sensor region, exemplary sensor array

213 Exemplary light signal power distribution component

213a Exemplary path for distributing light signal power from light signal power distribution component to first sensor 201

4a, 4b, 4c Exemplary output ports/exemplary output lines/paths of exemplary fourth sensor 204

300 Exemplary system for reading out a sensing device

301 Exemplary light source

302 Exemplary sensing device comprising a photonic integrated circuit

303 Exemplary readout system

303a Exemplary surface of readout system

304 Exemplary printed circuit board

304a Exemplary cable

305 Exemplary apertures or windows in sensing device

305a Exemplary aperture or window providing an optical path (input path) to an exemplary input grating

305b Exemplary aperture or window providing an optical path (output path) from an exemplary output grating or an exemplary optional alignment grating to an exemplary readout system

305c Exemplary aperture or window providing an optical path (output path) from an exemplary output grating or an exemplary optional alignment grating to an exemplary readout system

305d Exemplary aperture or window providing an optical path to or from an exemplary reference region on the photonic integrated circuit of the sensing device which does not comprise any light-emitting structures

306a Exemplary normal vector of surface of sensing device/exemplary normal vector of surface of photonic integrated circuit

306b Exemplary normal vector of surface of sensing device/exemplary normal vector of surface of photonic integrated circuit, which can be obtained by a linear transformation of normal vector 306 along the surface of sensing device/surface of photonic integrated circuit

307 Exemplary light beam of light source 301 of light to be inputted via free space, into at least one input grating of the photonic integrated circuit, exemplary input vector

307a Exemplary input direction angle of inputted light/exemplary input angle

308 Exemplary light signal outputted by the photonic integrated circuit, e.g. by an/the output grating and/or by a possible alignment grating, exemplary output vector

308a Exemplary output direction angle of outputted light signal/exemplary output angle

309 Exemplary input optical system

310 Exemplary movable stage comprising multiple movable stages/components

311 Exemplary movable stage one-dimensional (1D) stage, e.g. one-axis stage

311a Exemplary axis of stage 311

312 Exemplary movable stage two-dimensional (2D) stage, e.g. two-axis stage

312a Exemplary first axis of stage 312

312b Exemplary second axis of stage 312

313 Exemplary three-dimensional orthogonal reference coordinate system

314 Exemplary output signal by an alignment grating of the photonic integrated circuit, exemplary output vector

315 Exemplary photodiode array

315a, 315b, 315c, 315d, exemplary photodiodes

**Claims**

1. Method (100) for reading out a sensing device (302) comprising a photonic integrated circuit (200), comprising:

   inputting (101) light from at least one light source (201), e.g. via free space, into at least one input grating of the photonic integrated circuit (200), and

   collecting (102), by a readout system (303), at least one light signal outputted via free space by at least one output grating of the photonic integrated circuit (200).

2. The method (100) according to claim 1, further comprising determining a parameter from the collected outputted light signal, wherein the parameter can be at least one of the following parameters: a refractive index, a temperature or a wavelength.

3. The method (100) according to the preceding claim, wherein the inputting of light comprises inputting the light in an input direction that is parallel or not parallel to the normal vector of the surface of the photonic integrated circuit, and wherein the angle between the input direction and the normal vector of the surface of the photonic integrated circuit is equal or not equal to the angle between the output direction of the outputted light signal and the normal vector of the surface of the photonic integrated circuit; and/or wherein the light signal that is collected by the readout system hits the readout system at an angle that is orthogonal to the surface of the readout system; and/or wherein the angle between the input direction of the inputted light and the normal vector of the surface of the photonic integrated circuit is less than 90°.

4. The method (100) according to one of the preceding claims, wherein the inputting of light comprises focusing or collimating, by an input optical system, the light onto a spot on the at least one input grating of the photonic integrated circuit, and wherein the spot size can be at least the same size or larger than the size of the at least one input grating, e.g. at least one order of magnitude larger.

5. The method (100) according to one of the preceding claims, wherein the light signal outputted via free space is outputted, by the at least one output grating of the photonic integrated circuit, as focused beams or as collimated beams.

6. The method (100) according to one of the preceding claims, wherein the light signal outputted via free space by the at least one output grating of the photonic integrated circuit is directed by an output optical system onto the readout system, wherein said output optical system can comprise one or more optical elements, e.g. lenses, mirrors or reflectors.

7. The method (100) according to one of the preceding claims, further comprising a self-alignment step for aligning the light source, the photonic integrated circuit and the readout system with respect to each other for maximizing the light signal received by the readout system by directly optimizing, e.g. maximizing, the amount of the light signal received by the readout system and/or by optimizing, e.g. maximizing, an alignment function, wherein said alignment function can be a function of the received light signal or a function of a plurality of received light signals.

8. The method (100) according to one of the preceding claims, wherein the light is inputted by at least one coherent light source, e.g. a laser, in particular a continuous-wave fiber laser.

9. System (300) for reading out a sensing device (302) comprising a photonic integrated circuit (200), comprising:

   at least one light source (301);
   a sensing device (302) comprising a photonic integrated circuit (200), said photonic integrated circuit (200) comprising at least one input grating (205) and at least one output grating (201a, 201b, 201c, 202a, 202b, 202c, 203a, 203b, 203c);

a readout system (303);

wherein the at least one light source (301) is configured for inputting light, e.g. via free space, into the at least one input grating (205) of the photonic integrated circuit (200); and wherein the readout system (303) is configured for collecting a light signal outputted via free space by the at least one output grating of the photonic integrated circuit (200).

10. The system (300) according to the preceding claim, wherein the at least one output grating of the photonic integrated circuit (200) is configured for outputting the light signal in an output direction that is not parallel to the normal vector of the surface of the photonic integrated circuit and/or wherein the light source (301) is configured for inputting the light in an input direction that is not parallel to the normal vector of the surface of the photonic integrated circuit; and/or wherein the photonic integrated circuit (200) comprises a plurality of input gratings.

11. The system (300) according to one of the preceding claims, wherein the at least one light source (301) is a coherent light source, e.g. a laser, in particular a continuous-wave fiber laser, e.g. a 1550 nm continuous-wave fiber laser emitting an optical power in the range of 20 mW to 100 mW.

12. The system (300) according to one of the preceding system claims, wherein the readout system (303) comprises a photodector, wherein said photodector may comprise a one-dimensional or two-dimensional photodiode array (315), wherein said photodiode array may comprise a plurality of transimpedance amplifiers, wherein each transimpedance amplifier can be directly or indirectly connected to a photodiode of the photodiode array and/or wherein the photodetector comprises a charge-coupled device image sensor or a complementary-metal-oxide-semiconductor image sensor.

13. The system (300) according to one of the preceding system claims, wherein the at least one light source (301) is mounted on a movable stage (310) and/or wherein the readout system is mounted on a movable stage and/or wherein the sensing device is mounted on a movable stage.

14. The system (300) according to one of the preceding system claims, further comprising an output optical system configured for directing the light signal outputted via free space by the at least one output grating of the photonic integrated circuit onto the readout system, wherein the output optical system can comprise an afocal lens system and/or wherein the output optical system can comprise one or more optical elements, e.g. lenses, mirrors or reflectors.

15. Sensing device (302) comprising a photonic integrated circuit (200) configured for being read out according to one of the preceding method claims, wherein the photonic integrated circuit comprises at least one input grating configured for receiving light from a light source and at least one output grating configured for outputting a light signal via free space and at least one biosensor for detecting a target analyte in a fluidic sample and configured for generating said light signal, and wherein the sensing device can comprise a fluidic cartridge comprising at least one fluidic channel for transporting the fluidic sample to the at least one biosensor.

100

101

Inputting light from at least one light source, e.g. via free space, into at least one input grating of the photonic integrated circuit.

102

Collecting, by a readout system, at least one light signal outputted via free space by at least one output grating of the photonic integrated circuit.

FIG. 1

FIG. 2

EP 4 760 238 A1

FIG. 3a

EP 4 760 238 A1

FIG. 3b

FIG. 3c

EP 4 760 238 A1

FIG. 3d

Europäisches
Patentamt

European
Patent Office

Office européen
des brevets

## EUROPEAN SEARCH REPORT

**Application Number**

EP 24 38 3345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE VOS K ET AL: "Multiplexed Antibody Detection With an Array of Silicon-on-Insulator Microring Resonators", IEEE PHOTONICS JOURNAL, IEEE, USA, vol. 1, no. 4, 30 October 2009 (2009-10-30), pages 225-235, XP011484906, ISSN: 1943-0655, DOI: 10.1109/JPHOT.2009.2035433 * abstract * * figure 1 * * "2. SOI Microring Array: Chip Design, Readout and Detection Limit" * * page 226, paragraph 4 * | 1-15 | INV. G01N21/25 G01N21/77 G02B6/00 |
| X | PIETER NEUTENS ET AL: "Toward point-of-care diagnostics: Running enzymatic assays on a photonic waveguide-based sensor chip with a portable, benchtop measurement system", JOURNAL OF BIOPHOTONICS, WILEY - VCH VERLAG, DE, vol. 17, no. 1, 24 September 2023 (2023-09-24), page n/a, XP072572117, ISSN: 1864-063X, DOI: 10.1002/JBIO.202300279 * abstract * * figures 1-4 * | 1-15 | TECHNICAL FIELDS SEARCHED (IPC) G01N |
| X | US 2024/184046 A1 (WANG SHANG [US] ET AL) 6 June 2024 (2024-06-06) * figures 4A-4E * * paragraphs [0014], [0127] - [0145] * | 1-15 | |

-/--

The present search report has been drawn up for all claims

| Place of search | Date of completion of the search | Examiner |
|---|---|---|
| Munich | 29 April 2025 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 38 3345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHANNES BÜTOW ET AL: "Generating free-space structured light with programmable integrated photonics", ARXIV.ORG, CORNELL UNIVERSITY LIBRARY, 201 OLIN LIBRARY CORNELL UNIVERSITY ITHACA, NY 14853, 18 April 2023 (2023-04-18), XP091487892, * abstract * * figures 1-3 * | 1,9 | |

TECHNICAL FIELDS
SEARCHED      (IPC)

The present search report has been drawn up for all claims

| Place of search | Date of completion of the search | Examiner |
|---|---|---|
| Munich | 29 April 2025 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 38 3345

29-04-2025

| Patent document cited in search report | Publication date | Patent family member(s) | | Publication date |
|---|---|---|---|---|
| US 2024184046 A1 | 06-06-2024 | AU | 2016276980 A1 | 25-01-2018 |
| | | CA | 2989344 A1 | 15-12-2016 |
| | | CN | 107924027 A | 17-04-2018 |
| | | EP | 3308204 A1 | 18-04-2018 |
| | | EP | 4425153 A2 | 04-09-2024 |
| | | US | 2016363728 A1 | 15-12-2016 |
| | | US | 2020049882 A1 | 13-02-2020 |
| | | US | 2021033788 A1 | 04-02-2021 |
| | | US | 2024184046 A1 | 06-06-2024 |
| | | WO | 2016201387 A1 | 15-12-2016 |